# EUROPÄISCHE PATENTANMELDUNG

(11) **EP 1 671 766 A2**
(43) Veröffentlichungstag der Anmeldung: **21.06.2006**
(21) Anmeldenummer: 05112148.1
(22) Anmeldetag: 14.12.2005
(51) Int. Cl.: B28B 1/00, B28B 7/40

(54) **Verfahren zur Herstellung eines Keramiktiegels**

(30) Priorität: 17.12.2004 DE 102004060792
(71) Anmelder: BEGO Bremer Goldschlägerei Wilh. Herbst GmbH & Co. KG, 28359 Bremen (DE)
(72) Erfinder: Schlüter, Martin, 28719, Bremen (DE); Wiest, Thomas, 36088, Hünfeld (DE); Dierkes, Stephan, 28195, Bremen (DE)
(74) Vertreter: Eisenführ, Speiser & Partner

(57) **Zusammenfassung**

Die Erfindung betrifft ein Verfahren zur Herstellung eines Keramiktiegels. Vorgeschlagen werden die Schritte: Bereitstellen eines verfestigbaren Schlickers, Bereitstellen einer Gussform (10) für den Keramiktiegel, Einfüllen des Schlickers in die Gussform, Verfestigen des Schlickers in der Gussform durch (a) Einfrieren und/oder (b) Ändern seines pH-Werts, so dass ein Vorkörper entsteht und Wärmebehandeln des Vorkörpers, so dass ein Keramiktiegel entsteht.

Die Erfindung betrifft des Weiteren einen nach einem solchen Verfahren herstellbaren Keramiktiegel und ein Kit zur Herstellung eines solchen Keramiktiegels mit:
einer Gussform, vorzugsweise einer Metallform, für einen Keramiktiegel, einem Sol, vorzugsweise einem wässrigen SiO₂-Sol, umfassend eine Nano-Keramikpartikelfraktion, Keramikpartikel, umfassend eine Mikro-Keramikfraktion, gegebenenfalls einem Metallpulver, bestehend aus Metallen und/oder Legierungen und/oder intermetallischen Verbindungen, gegebenenfalls einem mehreren weiteren Zusatzstoffen und gegebenenfalls organischen oder anorganischen Bindemitteln. Schließlich betrifft die Erfindung eine Vorrichtung zum Durchführen des genannten Verfahrens.

## Beschreibung

Die Erfindung betrifft ein Verfahren zur Herstellung eines Keramiktiegels. Des Weiteren betrifft die Erfindung einen Keramiktiegel, ein Kit zur Herstellung eines Keramiktiegels und eine Vorrichtung zum Durchführen eines Verfahrens zur Herstellung eines Keramiktiegels.

Bekannt ist die Herstellung von Keramiktiegeln durch Gießen eines Schlickers in eine poröse, saugfähige Gipsform. Der Schlicker umfasst Suspensionsflüssigkeit, die von der saugfähigen Gipsform aufgenommen wird. Durch den Entzug der Suspensionsflüssigkeit bildet sich an der Wand der Gipsform eine Keramikschicht, die immer weiter anwächst. Ist die gewünschte Schichtdicke der Keramikschicht erreicht, wird der so entstandene Grünkörper entformt und anschließend gesintert, so dass ein Keramiktiegel entsteht.

Gemäß einer Variante wird als Gipsform eine Hohlgussgipsform verwendet. Nach Eingießen des Schlickers wird nach Erreichen der gewünschten Wandstärke des entstehenden Grünkörpers der überschüssige Schlicker abgegossen. Anschließend wird auch hier der erhaltene Grünkörper entformt und gesintert.

Nachteilig an diesen Verfahren ist, dass die verwendete Gipsform aufwendig in der Herstellung ist und nur zur Herstellung einer begrenzten Anzahl von Keramiktiegeln verwendet werden kann. Dadurch sind bekannte Verfahren relativ kostenintensiv.

Durch Alterung der Gipsform kommt es zudem zu Veränderungen der Tiegelgeometrie und ―oberfläche, so dass die hergestellten Keramiktiegel nur eine geringe Maßhaltigkeit aufweisen. Eine geringe Maßhaltigkeit bedeutet, dass sich durch ein gleichbleibendes Verfahren hergestellte Keramiktiegel untereinander in ihren geometrischen Abmessungen stark von den mittleren geometrischen Abmessungen der hergestellten Keramiktiegel unterscheiden können. Eine geringe Maßhaltigkeit ist daher gleichbedeutend damit, dass ein derartiges Verfahren eine geringe Reproduzierbarkeit bezüglich der hergestellten Keramiktiegel aufweist. Wenn ein Verfahren eine geringe Reproduzierbarkeit aufweist, sind keine kleinen Maßtoleranzen erreichbar. Die Maßtoleranz ist die zulässige Abweichung in einer geometrischen Abmessung.

Des Weiteren sind mit Verfahren nach dem Stand der Technik keine kleinen Formtoleranzen erreichbar. Sind kleine Formtoleranzen vorgegeben, werden nur Keramiktiegel als Gutteile akzeptiert, die von einer vorgegebenen geometrischen Form nur um eine vorgegebene geometrische Abweichung (Formtoleranz) abweichen, der Rest ist Ausschuss. Das bedeutet, dass Keramiktiegel, die mit Hilfe der gleichen Gussform und gleichen sonstigen Verfahrensbedingungen nach einem Verfahren nach dem Stand der Technik hergestellt werden, sich in ihren geometrischen Abmessungen so stark von der vorgegebenen geometrischen Form unterscheiden können, dass ein hoher Anteil an Ausschuss entsteht.

Nach Verfahren nach dem Stand der Technik hergestellte Keramiktiegel weisen zudem eine ungleichmäßige Oberfläche auf, was für deren späteren Einsatz nachteilig ist. Nachteilig ist außerdem, dass sich die Wandstärke örtlich unterscheiden kann, was zu der geringen Formhaltigkeit beiträgt.

Es ist Aufgabe der vorliegenden Erfindung, die angegebenen Nachteile im Stand der Technik zu überwinden oder zumindest zu lindern.

Die Erfindung löst das Problem gemäß einem ersten Aspekt durch ein Verfahren zur Herstellung eines Keramiktiegels mit den Schritten
- Bereitstellen eines verfestigbaren Schlickers,
- Bereitstellen einer Gussform für den Keramiktiegel,
- Einfüllen des Schlickers in die Gussform,
- Verfestigen des Schlickers in der Gussform durch
   (a) Einfrieren und/oder
   (b) Ändern seines pH-Werts und/oder
   (c) Zugabe organischer oder anorganischer Bindemittel,
   so dass ein Vorkörper entsteht und
- Wärmebehandeln des Vorkörpers, so dass ein Keramiktiegel entsteht.

Die Erfindung löst das Problem gemäß einem zweiten Aspekt durch einen Keramiktiegel, der nach einem erfindungsgemäßen Verfahren, vorzugsweise in einer bevorzugten Verfahrensgestaltung (siehe dazu unten) herstellbar ist, vorzugsweise hergestellt ist.

Die Erfindung löst das Problem gemäß einem dritten Aspekt durch ein Kit zur Herstellung eines Keramiktiegels mit:
- einer Gussform, vorzugsweise einer Metallform, für einen Keramiktiegel,
- einem Sol, vorzugsweise einem wässrigen SiO₂-Sol, umfassend eine Nano-Keramikpartikelfraktion,
- Keramikpartikel, umfassend eine Mikro-Keramikfraktion,
- gegebenenfalls einem Metallpulver, bestehend aus Metallen und/oder Legierungen und/oder intermetallischen Verbindungen,
- gegebenenfalls einem oder mehreren weiteren Zusatzstoffen und
- gegebenenfalls organischen oder anorganischen Bindemitteln.

Schließlich löst die Erfindung das Problem gemäß einem vierten Aspekt durch eine Vorrichtung zum Durchführen eines erfindungsgemäßen Verfahrens mit einer Gussform für mindestens einen Keramiktiegel und einer mit einem Vorratsbehälter für einen Schlicker in Verbindung bringbaren Dosiervorrichtung zur Abgabe des Schlickers in die Gussform, die Mittel zum Kühlen der Gussform unter die Gefrieraushärtetemperatur des Schlickers und/oder Mittel zum Zudosieren einer Säure oder einer Base zum Schlicker und/oder Mittel zum Zugeben von organischem oder anorganischem Bindemittel zum Schlicker, Mittel zum Entformen eines durch Verfestigen aus dem Schlicker hervorgegangenen Vorkörpers aus der Gussform und Mittel zum Wärmebehandeln des Vorkörpers umfasst.

Vorteilhaft an der Erfindung (in ihren Aspekten) ist, dass die einzusetzenden Gussformen leicht und kostengünstig herstellbar sind und für die Herstellung einer praktisch unbegrenzt hohen Zahl an Keramiktiegeln eingesetzt werden können. Hierdurch ist eine kostengünstige Fertigung möglich. Zudem sind kleine Maßtoleranzen erreichbar, d.h. dass sich, wie oben erläutert, zwei nach einem erfindungsgemäßen Verfahren hergestellte Keramiktiegel in ihren Dimensionen nur geringfügig unterscheiden. Vorteilhaft ist weiter, dass eine hohe Formtreue und damit geringe Formtoleranzen erreichbar sind. Das heißt, dass sich zwei nach einem erfindungsgemäßen Verfahren hergestellte Keramiktiegel in ihrer Form nur geringfügig unterscheiden. Ein weiterer Vorteil ist, dass glatte Oberflächen erreichbar sind.

Erfindungsgemäße bzw. erfindungsgemäß hergestellte Keramiktiegel können so ausgestaltet sein, dass sie eine hohe thermische Wechselbeständigkeit, eine hohe Bruchfestigkeit und Thermoschockbeständigkeit, eine geringe Benetzbarkeit der Tiegeloberfläche durch metallische Schmelzen, eine hohe chemische Resistenz gegen metallische Schmelzen, eine geringe Porosität und/oder eine exakte Geometrie aufweisen.

Eine geringe Benetzbarkeit wird erhalten, wenn der Schlicker schlecht benetzende keramische Materialien umfasst, wie beispielsweise Siliziumnitrid oder Bornitrid. Eine hohe chemische Resistenz gegen metallische Schmelzen wird beispielsweise dadurch erhalten, dass der Schlicker Zirkoniumdioxid enthält.

Im erfindungsgemäßen Verfahren durch Verfestigung des Schlickers entstehende Vorkörper weisen zudem eine hohe Grünfestigkeit und eine gute Handhabbarkeit auf.

Unter einem Keramiktiegel wird ein Gefäß aus Keramik verstanden. Insbesondere betrifft die vorliegende Erfindung Keramiktiegel, die geeignet sind zum Schmelzen von Metallen oder Legierungen (insbesondere in der Dentaltechnik). Derartige Metalle oder Legierungen weisen in der Regel Schmelzpunkte über 500 °C auf. Die Erfindung betrifft zudem insbesondere Keramiktiegel für die Thermogravimetrie.

Vorzugsweise beträgt die Wandstärke eines erfindungsgemäßen Keramiktiegels (a) zum Schmelzen von Metallen/Legierungen oder (b) für die Thermogravimetrie unter 8 mm und das Volumen unter 500 ml. Die Thermoschockbeständigkeit und die Resistenz gegen metallische Schmelzen ist vorzugsweise so groß, dass der Keramiktiegel keinem signifikantem Festigkeitsverlust unterliegt, insbesondere nicht reißt, wenn flüssiges Metall mit einer Temperatur von 500 °C schlagartig in ihn eingegossen wird.

Die Gussform besteht aus oder umfasst bevorzugt Material mit einer thermischen Leitfähigkeit von über 10 W/K·m bei 23 °C und 1013 hPa (z. B. Metall, siehe unten) und/oder Kunststoff und/oder Kautschukprodukte und/oder Silikone. Vorteilhaft an der Verwendung von Gussformen mit Materialien mit der angegebenen thermischen Leitfähigkeit ist, dass schnell ein Temperaturausgleich zwischen dem in der Gussform befindlichen Schlicker und der Umgebung stattfindet. Wird der Schlicker beispielsweise durch Einfrieren verfestigt, so lässt sich hierdurch die Zeit verkürzen, bis der Schlicker vollständig gefroren ist. Vorteilhaft an der Verwendung von Kunststoff ist dessen geringer Preis, so dass entsprechende Gussformen kostengünstig herstellbar sind. Vorteilhaft an der Verwendung von Kautschukprodukten und Silikonen ist deren Elastizität, die das Entformen des Vorkörpers erleichtert.

Unter einer Wärmebehandlung wird ein Verfahren verstanden, das durch Einwirkung von Wärme eine irreversible Änderung der mechanischen oder stofflichen Eigenschaften des Vorkörpers bewirkt. Beispiele für Wärmebehandlung sind: Sintern, Dichtsintern, Ansintern, Reagieren lassen bei erhöhter Temperatur, Reaktionssintern.

Optional umfasst das Verfahren einen oder mehrere der folgenden Schritte: Entformen des Vorkörpers vor dem Wärmebehandeln und/oder Trocknen des Vorkörpers nach dem Entformen, vorzugsweise bei 40 °C bis 100 °C und/oder einer relativen Luftfeuchtigkeit von unter 30%.

Bevorzugt ist ein Verfahren, bei dem es sich bei dem verfestigbaren Schlicker um einen gefriergussfähigen Schlicker handelt.

Ein Schlicker wird als gefriergussfähig betrachtet, wenn er zunächst bei einer Temperatur flüssig ist (Ausgangstemperatur), beim Abkühlen unter eine vorgegebene Temperatur (Gefrieraushärtetemperatur) so weit verfestigt, dass er sein eigenes Gewicht trägt (sofern die Wandstärke hinreichend groß gewählt ist), und beim nachfolgenden Wiedererwärmen auf die Ausgangstemperatur ein Vorkörper zurückbleibt, dessen Festigkeit so hoch ist, dass er (noch immer) sein Eigengewicht trägt. Die Gefrieraushärtetemperatur liegt unter dem Gefrierpunkt des Dispersionsmittels des Schlickers, beispielsweise zwischen -200 °C und 0 °C.

Bevorzugt wird ein Schlicker verwendet, dessen Suspensionsflüssigkeit Wasser ist. Beim Einfrieren des Schlickers entstehen Eiskristalle. An den Stellen, an denen sich Eiskristalle befinden, befinden sich nach dem Trocknen Poren. Durch ein derartiges Verfahren hergestellte Keramiktiegel zeichnen sich durch eine im Vergleich zu nach herkömmlichen Verfahren hergestellten Keramiktiegeln erhöhte Thermoschockbeständigkeit aus.

Falls eine Verfestigung durch Einfrieren erfolgt, umfasst das erfindungsgemäße Verfahren zudem vorzugsweise die Schritte: Variieren der Einfrierbedingungen wie insbesondere Abkühlgeschwindigkeit, Einfriertemperatur, Einfrierrichtung und Wärmeleitfähigkeit der Gussform und der Zusammensetzung des verfestigbaren Schlickers, Ermitteln der Thermoschockbeständigkeit des hergestellten Keramiktiegels und Ermitteln der optimalen Einfrierbedingungen und der optimalen Zusammensetzung zum Erzielen einer möglichst hohen Thermoschockbeständigkeit. Die Thermoschockbeständigkeit wird durch Eingießen von metallischen Schmelzen verschiedener Temperaturen in einen Keramiktiegel mit einer Temperatur von 25°C ermittelt. Die Thermoschockbeständigkeit wird charakteristisiert durch die Temperatur, bei welcher der Keramiktiegel gerade noch nicht reißt.

Alternativ wird ein Schlicker verwendet, der durch Ändern des pH-Werts verfestigbar ist. Zum Verfestigen wird dann beispielsweise durch Zugabe einer Säure oder Base der pH-Wert des Schlickers geändert.

Gemäß einer vorteilhaften Weiterbildung des Verfahrens wird der verfestigbare Schlicker in eine Hohlgussform gegossen, deren Temperatur unter der Gefrieraushärtetemperatur des Schlickers liegt und gegebenenfalls gehalten wird. Die Gussform wird vorzugsweise so bewegt, dass sich eine gleichmäßig dicke Keramikschicht an der Gussform ablagert.

Bevorzugt ist ein Verfahren, bei dem die Gussform zumindest an einigen Stellen, die beim Einfrieren in Kontakt mit dem gefriergussfähigen Schlicker stehen, aus Metall besteht. Bevorzugt sind Metalle mit einer hohen thermischen Leitfähigkeit. Unter einer hohen thermischen Leitfähigkeit wird eine Leitfähigkeit von über 150 W/K·m bei 23 °C und 1013 hPa verstanden. Bevorzugte Metalle sind Aluminium, Kupfer und Edelstahl.

Besonders bevorzugt besteht die Gussform aus Metall.

Bevorzugt ist ein Verfahren, bei dem das Bereitstellen des verfestigbaren Schlickers das Herstellen einer Mischung umfasst aus:
- einem Dispersionsmittel,
- Keramikpartikeln mit:
   i) einer Fraktion mit einem (Partikel-)Durchmesser von unter 500 nm (Nano-Keramikpartikelfraktion), mit einem Anteil von 2 bis 74 Vol.-% bezogen auf das Volumen der gesamten Mischung
      und
   ii) einer Fraktion mit einem (Partikel-)Durchmesser von über 500 nm bis 500 µm (Mikro-Keramikpartikelfraktion) mit einem Anteil von 2 bis 74 Vol.-% bezogen auf das Volumen der gesamten Mischung,
- gegebenenfalls einem Metallpulver, bestehend aus Metallen und/oder Legierungen und/oder intermetallischen Verbindungen,
- gegebenenfalls einem oder mehreren weiteren Zusatzstoffen und
- gegebenenfalls organischen oder anorganischen Bindemitteln.

Ist der Schlicker durch Ändern seines pH-Werts verfestigbar, so kann alternativ ein Schlicker eingesetzt werden, der die obigen Bestandteile mit Ausnahme der Nano-Keramikpartikelfraktion aufweist.

Als Dispersionsmittel werden beispielsweise Wasser, ein Alkohol oder eine wässrige oder alkoholische Mischung von Flüssigkeiten verwendet, die gegebenenfalls Benetzungsmittel und/oder Stabilisatoren und/oder antimikrobielle Wirkstoffe umfassen. Bevorzugt ist Wasser als Dispersionsmittel.

Die angegebenen Durchmesser der Partikel sind diejenigen, die nach ISO 13320-1 bestimmt werden, z.B. mit dem Gerät LS-13320 der Beckman Coulter GmbH. Der Anteil der Keramikpartikel in Vol.-% wird beispielsweise mit dem Partikelgrößenanalysator Coulter LS 230 der Coulter Cooperation, Miami, Florida, U.S.A. ermittelt. Dabei wird der Feststoffgehalt des Schlickers dem Analysebereich des Geräts angepasst.

Besonders bevorzugt ist ein Verfahren, bei dem der Schlicker hergestellt wird durch:
- Bereitstellen eines Sols, das Keramikpartikel mit einem Durchmesser von unter 500 nm (Nano-Keramikpartikelfraktion) umfasst,
- Vermischen des Sols mit Keramikpartikeln mit einem Durchmesser zwischen 500 nm und 500 µm (Mikro-Keramikpartikelfraktion),
- gegebenenfalls Vermischen mit einem Metallpulver, bestehend aus Metallen und/oder Legierungen und/oder intermetallischen Verbindungen,
- gegebenenfalls Vermischen mit einem oder mehreren weiteren Zusatzstoffen und
- gegebenenfalls Vermischen mit organischen oder anorganischen Bindemitteln.

Optional wird das Sol zusätzlich mit Keramikpartikeln vermischt, die einen Durchmesser von unter 500 nm aufweisen und die vorzugsweise aus ein, zwei oder mehr keramischen Verbindungen bestehen, die aus der Gruppe ausgewählt sind, die besteht aus: Aluminiumoxid, Mullit, Spinell, Zirkoniumdioxid, Magnesiumoxid, Siliziumdioxid. Die Herstellung des Sols erfolgt beispielsweise durch Ansäuern wässriger Lösungen von Natriumsilikat (Na₄SiO₄) (Wasserglaslösung). Die verdünnten Wasserglaslösungen werden rasch über Kationenaustauscher geleitet und das anfallende (instabile) Sol durch Alkalisieren sowie Erwärmen, beispielsweise auf 60 °C, stabilisiert. Derartige Sole werden beispielweise von H.C. Starck oder den Chemiewerken Bad Köstritz in den Handel gebracht.

Bevorzugt ist ein Verfahren, bei dem als Nano-Keramikpartikelfraktion Keramikpartikel aus ein, zwei oder mehr keramischen Verbindungen eingesetzt werden, die aus der Gruppe ausgewählt sind, die besteht aus: Siliziumdioxid; Aluminiumoxid, insbesondere Böhmit; Zirkoniumdioxid; Yttriumoxid; Yttriumsalze; Zirkoniumnitrat; Titandioxid

Vorzugsweise besteht die Nano-Keramikpartikelfraktion zu über 60 Gew.-%, vorzugsweise zu über 90 Gew.-% aus Siliziumdioxid.

In einem bevorzugten Verfahren hat die Nano-Keramikpartikelfraktion einen Anteil von 2 bis 30 Vol.-% bezogen auf das Volumen der gesamten Mischung.

Vorzugsweise besteht die Mikro-Keramikpartikelfraktion aus Oxiden, Mischoxiden, Nitriden oder Carbiden von einem oder mehreren Elementen, die aus der folgenden Gruppe ausgewählt sind: Lithium, Beryllium, Bor, Natrium, Magnesium, Aluminium, Silizium, Kalium, Calcium, Scandium, Titan, Vanadium, Chrom, Mangan, Eisen, Cobalt, Nickel, Kupfer, Zink, Yttrium, Zirkonium, Niob, Molybdän, Technetium, Hafnium, Zinn, Cadmium, Blei, Strontium, Barium, Antimon.

Besonders bevorzugt werden als Keramikpartikel, welche die Mikro-Keramikpartikelfraktion bilden, ein, zwei oder mehr keramische Verbindungen eingesetzt, die aus der Gruppe ausgewählt sind, die besteht aus: Aluminiumoxid, Mullit, Spinell, Zirkoniumdioxid, Magnesiumoxid, Siliziumdioxid.

Vorzugsweise hat die Mikro-Keramikpartikelfraktion einen Anteil von 30 bis 60 Vol.-% bezogen auf das Volumen der gesamten Mischung.

Bevorzugt ist ein Verfahren, wobei als Metallpulver
- ein Pulver eines Metalls und/oder
- eine Mischung von Pulvern von Metallen und/oder
- ein Pulver einer Legierung oder Verbindung aus zwei oder mehr Metallen aus einer Gruppe von Metallen eingesetzt wird, die besteht aus: Aluminium, Magnesium, Zirkonium, Niob, Yttrium, Hafnium, Vanadium, Kalzium, Kalium, Tantal, Titan, Eisen, Silizium, Germanium, Molybdän, Mangan, Zink, Zinn, Bismut, Nickel, Kobalt.

Bevorzugt ist zudem ein Verfahren, bei dem die Mischung
- ein Metallpulver und/oder
- eine Mikro-Keramikpartikelfraktion und/oder
- einen oder mehrere weitere Zusatzstoffe
enthält, die
a) sich untereinander und/oder mit gasförmigen Reaktanten unter Volumenvergrößerung umsetzen lassen oder
b) durch thermische Aktivierung zu einer Veränderung des Kristallgitters (Phasenveränderung) und damit zu einer Volumenvergrößerung veranlasst werden können, und
wobei der Vorkörper nach dem Einfrieren des Schlickers, gegebenenfalls unter Zusatz eines oder mehrerer gasförmiger Reaktanten und/oder gasbildender Reaktanten so behandelt wird, dass das Metallpulver und/oder die Keramikpartikel und/oder eine oder mehrere der weiteren Zusatzstoffe unter Volumenvergrößerung
a) chemisch reagieren oder
b) eine Phasenveränderung durchführen.

Vorzugweise wird dabei AlMg5 eingesetzt. Die Teilchengröße des Metallpulvers liegt bevorzugt bei 100 nm bis 500 µm, besonders bevorzugt bei 0,5 µm bis 100 µm.

Der Vorkörper wird vorzugsweise beim Wärmebehandeln so behandelt, dass die genannten Reaktionen oder Phasenveränderungen eintreten. Bevorzugt ist ein Verfahren, bei dem das Metallpulver und die Behandlung so gewählt sind, dass das Metallpulver bei der Behandlung im festen Zustand unter Volumenvergrößerung reagiert. Vorzugsweise ist das Metallpulver vor der Behandlung in die Keramik eingebettet. Eingesetzt werden kann insoweit z.B. Niob. Durch die Reaktion kommt es zu einer Kompensation des Sinterschwunds der übrigen Bestandteile des Vorkörpers, so dass sich insgesamt für den Vorkörper kein (oder kein nennenswerter) Sinterschwund ergibt.

Alternativ ist ein Verfahren bevorzugt, bei dem das Metallpulver und die Behandlung so gewählt sind, dass das Metallpulver während der Behandlung (aufgrund der gewählten Temperatureinstellungen) zunächst flüssig wird und anschließend unter Volumenvergrößerung reagiert. Bei diesem Verfahren wird das Metallpulver zunächst flüssig, fließt in die Poren und schließt diese zumindest teilweise durch Volumenzunahme bei der Reaktion. Diese Reaktion führt zur Verringerung der Porosität, zur Steigerung der Festigkeit und gegebenenfalls ebenfalls zur Kompensation des Sinterschwunds. Ein Beispiel für ein geeignetes Metallpulver ist AlMg5. Vergleiche hierzu insbesondere Anwendungsbeispiel 3 unten.

Als gasförmige Reaktanten werden beispielsweise O₂, N₂, CO, CO₂ oder Mischungen daraus eingesetzt.

Bevorzugt ist ein Verfahren, bei dem der Anteil an
- Metallpulver und/oder
- Mikro-Keramikpartikelfraktion und/oder
- dem einen oder den mehreren Zusatzstoffen,
die unter Volumenvergrößerung chemisch reagieren oder eine Phasenveränderung durchführen, im Schlicker so hoch gewählt ist, dass der fertige Keramiktiegel in seinen Außenabmessungen von den korrespondierenden Innenabmessungen der Gussform jeweils bei 23 °C und 1013 hPa um weniger als 2 %, vorzugsweise weniger als 1 %, abweicht.

Bevorzugt wird der Anteil an Metallpulver und/oder Mikro-Keramikpartikelfraktion und/oder dem einen oder den mehreren Zusatzstoffen so gewählt, dass sich eine Steigerung der Festigkeit des Keramiktiegels um 20 % im Vergleich zu einem Keramiktiegel ergibt, der bei ansonsten gleicher Verfahrensführung ohne das genannte Metallpulver und/oder ohne die genannte Mikro-Keramikpartikelfraktion und/oder ohne entsprechende Zusatzstoffe hergestellt ist. Zur Bestimmung des entsprechenden Anteils wird der Anteil an Metallpulver und/oder Mirko-Keramikpartikelfraktion und/oder dem einen oder dem mehreren Zusatzstoffen am Schlicker variiert. Anschließend wird mit diesem Schlicker nach einem erfindungsgemäßen Verfahren ein Probekörper hergestellt. Die Abmessungen des Probekörpers sind so gewählt, dass ein standardisierter 4-Punkt-Biegeversuch an diesem Probekörper durchführbar ist. Anschließend wird ein 4-Punkt-Biegeversuch durchgeführt und so die Festigkeit des Probekörpers bestimmt.

Der Anteil an Metallpulver und/oder Mikro-Keramikpartikelfraktion und/oder den mehreren Zusatzstoffen wird anhand der durch dieses Vorgehen erhaltenen Messdaten so gewählt, dass eine Festigkeit erreicht wird, die 20 % über der eines Keramiktiegels liegt, der ohne das entsprechende Metallpulver und/oder ohne die entsprechende Mikrokeramikpartikelfraktion und/oder ohne entsprechende Zusatzstoffe hergestellt ist.

Bevorzugt wird der Anteil an Metallpulver und/oder Mikro-Keramikpartikelfraktion und/oder dem einen oder den mehreren Zusatzstoffen so gewählt, dass sich eine Verringerung der offenen Porosität um mehr als 10 %, insbesondere mehr als 25 %, insbesondere mehr als 50 %, im Vergleich zu einem Keramiktiegel ergibt, der bei ansonsten gleicher Verfahrensführung ohne das genannte Metallpulver und/oder ohne die genannte Mikro-Keramikpartikelfraktion und/oder ohne entsprechende Zusatzstoffe hergestellt ist. Die offene Porosität wird dabei nach dem Wassereindringverfahren nach ISO/FDIS 18754 bestimmt.

In einem bevorzugten Verfahren wird der Anteil an Metallpulver und/oder Mikro-Keramikpartikelfraktion und/oder den Zusatzstoffen so gewählt, dass eine vorgegebene offene Porosität F der Keramiktiegels erhalten wird.

Im Folgenden wird die Erfindung anhand von Ausführungsbeispielen und der Zeichnungen näher erläutert. Dabei zeigt:

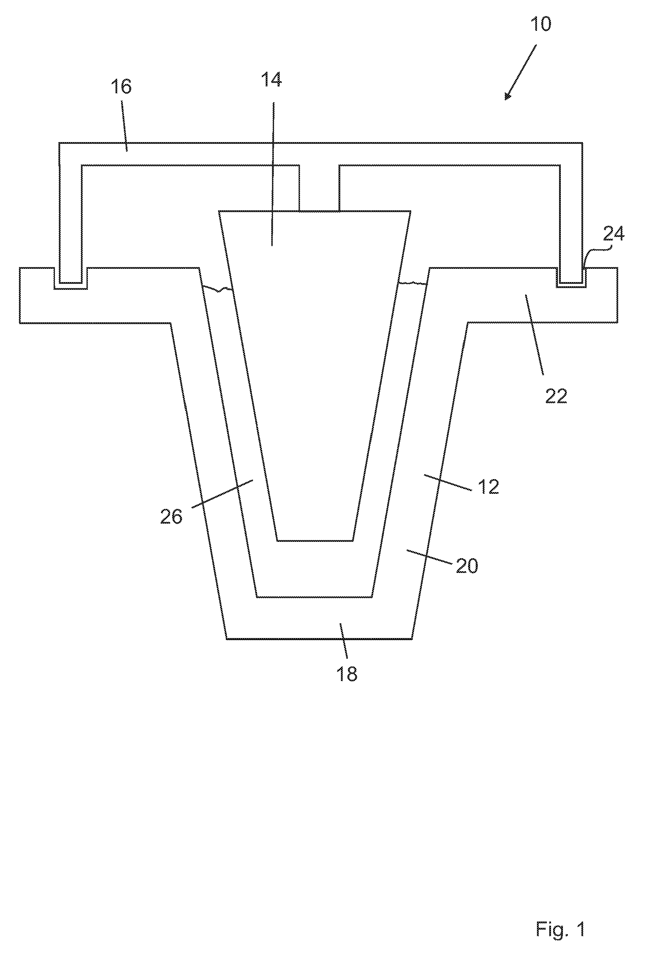

Fig. 1 eine Gussform zur Verwendung in einem Verfahren gemäß einem Ausführungsbeispiel der Erfindung.

### Ausführungsbeispiel 1:

Im Folgenden wird ein Verfahren zur Herstellung eines Keramiktiegels gemäß einem Ausführungsbeispiel der vorliegenden Erfindung beschrieben. Ein wässriges Siliziumdioxid-Sol wird mit Aluminiumoxid- und Mullit-Pulver mittels Rührer vermischt; Glyzerin wird zugesetzt.

Der Median (d₅₀) der Verteilung der Durchmesser der SiO₂-Partikel im wässrigen SiO₂ beträgt 8 nm. Die Durchmesser der Aluminiumoxidpulverpartikel liegen unterhalb von 10 µm, die Durchmesser der Mullitpulverpartikel unter 80 µm. Ein derartiges Sol wird technisch hergestellt, beispielsweise durch Ansäuern wässriger Natriumsilikatlösusngen, Leiten der Lösung über Kationentauscher und Alkalisieren des entstehenden Sols. Ein derartiges Sol wird als Köstrosol 08/30 von der Fa. CWK vertrieben.

Das Gemisch hat die in der folgenden Tabelle angegebene Zusammensetzung:

| Material | g | Gew.-% |
|---|---|---|
| Mullit | 100 | 50,9 |
| Aluminiumoxid | 45 | 22,9 |
| SiO₂-Sol | 50 | 25,4 |
| Glyzerin | 1,5 | 0,8 |
| Summe | 196,5 | 100,0 |

Das Gemisch ist ein gefriergussfähiger, also ein spezieller verfestigbarer Schlicker. Der Schlicker ist zum Eingießen in eine metallische Gussform 10 (Fig. 1) vorgesehen. Die metallische Gussform 10 umfasst einen Grundkörper 12 und einen Einsatz 14, der über einen Arm 16 lösbar mit dem Grundkörper 12 verbunden ist. Der Einsatz 14 hat die Form eines Kegelabschnitts.

Der Grundkörper 12 umfasst einen Boden 18 und eine Seitenwand 20, an die sich eine Krempe 22 anschließt. Vom Boden 18 und der Seitenwand 20 wird ein nach oben offener, kegelstumpfförmiger Hohlraum gebildet. Der Öffnungswinkel der Seitenwand 20 entspricht dem Öffnungswinkel des kegelabschnittsförmigen Einsatzes 14. Der Einsatz 14 ist durch den Arm 16 so zum Grundkörper 12 orientiert, dass der Abstand zwischen der Seitenwand 20 und dem Einsatz konstant ist.

Der Arm 16 ist am Einsatz 14 festgeschraubt und dadurch fest, aber lösbar mit diesem verbunden. Der Arm 16 liegt in Ausnehmungen 24, die in der Krempe 22 ausgebildet sind, auf dem Grundkörper 12 auf.

In den Zwischenraum zwischen den Grundkörper 12 und Einsatz 14 wird der Schlicker (vgl. Bezugszeichen 26) eingegossen. Das Gewicht des Einsatzes 14 ist so gewählt, dass der Auftrieb durch den Schlicker 26 nicht dazu führt, dass sich der Einsatz 14 beim Einfüllen des Schlickers relativ zum Grundkörper 12 bewegt. In einer alternativen Bauform wird der Arm 16 fest mit dem Grundkörper 12 verbunden, beispielsweise durch eine Schraube oder einen Bajonettverschluss.

Die metallische Gussform 10 wird anschließend zusammen mit dem eingefüllten Schlicker 26 in ein Eisfach gestellt und eingefroren. Die Lufttemperatur im Eisfach beträgt -40 °C, der Druck 1013 hPa. Im Eisfach kühlen die metallische Gussform und der darin enthaltene Schlicker ab. Nach einiger Zeit gefriert der Schlicker und es bildet sich ein Vorkörper. Die Zeit bis zum Gefrieren wird in Vorversuchen ermittelt. Die Einfrierzeit liegt dabei typischerweise, je nach Dicke der metallischen Gussform und des Abstands zwischen Grundkörper 12 und Einsatz 14, zwischen 30 und 300 min.

Nach dieser Zeit wird die metallische Gussform dem Eisfach entnommen. Anschließend wird der Einsatz 14 entfernt und der Vorkörper, der aus dem Schlicker durch Einfrieren hervorgegangen ist, wird der metallischen Gussform 10 entnommen. Der so erzeugte Vorkörper wird bei 60 °C und 1013 hPa bei 30% relativer Luftfeuchtigkeit in einem Trockenschrank getrocknet. Alternativ kann sich der Formkörper während der Trocknung auch noch in der Gussform befinden. Beim Trocknen entweicht das Wasser, der Vorkörper kollabiert jedoch nicht, da sich durch das Einfrieren ein stabiles Gerüst aus Keramikpartikeln gebildet hat, welches erhalten bleibt, so dass der Vorkörper sein eigenes Gewicht trägt. Nach dem Trocknen bleibt der vom Wasser befreite Vorkörper zurück. Anschließend wird der Vorkörper für 3 Stunden bei 1200 °C gesintert, so dass ein Keramiktiegel entsteht.

### Ausführungsbeispiel 2:

Im Folgenden wird ein weiteres Ausführungsbeispiel eines erfindungsgemäßen Verfahrens beschrieben. Zunächst wird ein wässriges SiO₂-Sol mit Aluminiumoxid, Mullit und Nb-Pulver mittels Rührer vermischt; Glyzerin wird zugesetzt. Die Durchmesser der Aluminiumoxid-, Mullit- und SiO₂- Partikel sind die im Ausführungsbeispiel 1 angegebenen. Der Durchmesser der Niobpartikel liegt unter 40 µm.

| Material | g | Gew.-% |
|---|---|---|
| Mullit | 100 | 50,4 |
| Alluminiumoxid | 45 | 22,7 |
| SiO₂-Sol | 50 | 25,2 |
| Glyzerin | 1,5 | 0,7 |
| Nb | 2 | 1,0 |
| Summe | 198,5 | 100,0 |

Der so erzeugte Schlicker wird wie in Ausführungsbeispiel 1 in eine metallische Gussform gegossen und bei -40 °C im Eisfach eingefroren. Der entstehende Vorkörper wird entformt und anschließend bei 60 °C, 1013 hPa und 30 % relativer Luftfeuchte in einem Trockenschrank getrocknet. Anschließend wird der Vorkörper für 3 Stunden bei 1200 °C an der Luft gesintert. Beim Sintern oxidiert das Nb-Pulver (aufgrund der Anwesenheit von Luftsauerstoff) unter Volumenzunahme zu Niobpentoxid.

### Ausführungsbeispiel 3:

Im Folgenden wird ein weiteres Ausführungsbeispiel eines erfindungsgemäßen Verfahrens beschrieben. Zunächst wird ein wässriges SiO₂-Sol mit Aluminiumoxid, Mullit, Nb- und AlMg5-Pulver mittels Rührer vermischt. Der Durchmesser der AlMg5-Pulverpartikel liegt unter 80 µm. Die Durchmesser der anderen Partikel entsprechen den im Ausführungsbeispiel 2 angegebenen.

| Material | g | Gew.-% |
|---|---|---|
| Mullit | 100 | 45,8 |
| Aluminiumoxid | 45 | 20,6 |
| SiO₂-Sol | 50 | 22,9 |
| Glyzerin | 1,5 | 0,7 |
| Nb | 2 | 0,9 |
| AlMg5 | 20 | 9,1 |
| Summe | 218,5 | 100,0 |

Der so erzeugte Schlicker wird wie in Ausführungsbeispiel 1 in eine metallische Gussform gegossen und bei -40 °C mittels Kryostat eingefroren. Der entstehende Vorkörper wird entformt und anschließend bei 60 °C, 1013 hPa und 30 % relativer Luftfeuchte in einem Trockenschrank getrocknet. Anschließend wird der Vorkörper zunächst für 2h auf 600°C bis 700°C erwärmt und anschließend für 3 Stunden bei 1200°C an der Luft gesintert. Während der Vorkörper eine Temperatur von 600°C bis 800°C hat, verflüssigt das AlMg5-Pulver und wird unter Volumenzunahme zu Aluminiumoxid, Magnesiumoxid und Spinell oxidiert. Diese alternative Verfahrensgestaltung führt zu einer besonders geringen Porosität.

Der eintretende Volumenzuwachs kompensiert bei beiden Verfahrensalternativen den Sinterschrumpf der übrigen Bestandteile, so dass der Vorkörper nach dem Sintern Abmessungen hat, die um weniger als 1 % von den Messungen abweicht, die der Vorkörper vor dem Sintern hatte.

Das oben beschriebene Verfahren nach den Ausführungsbeispielen 1 bis 3 lässt sich mittels einer erfindungsgemäßen Vorrichtung mechanisiert durchführen. Eine erfindungsgemäße Vorrichtung weist eine Dosiervorrichtung auf, um Schlicker in eine z.B. metallische Gussform einzufüllen. Dosiervorrichtungen sind beispielsweise Pumpen und Ventile, insbesondere Magnetventile. Zudem sind vorzugsweise Mittel vorgesehen, um den Einsatz 14 relativ zum Grundkörper 12 zu fixieren, und Mittel zum Kühlen der metallischen Gussform 10. Beispiele hierfür sind Peltierelemente oder Kompressorkühlgeräte.

Des Weiteren umfasst die erfindungsgemäße Vorrichtung im vorliegenden Beispielsfall Mittel zum Entformen des Vorkörpers nach dem Einfrieren. Eine Möglichkeit hierzu ist beispielsweise, die Gussform 10 elastisch verformbar auszubilden. Durch Druck auf den Boden 18 in Fig. 1 von unten nach oben wird der Vorkörper von der Gussform gelöst. Alternativ ist der Boden relativ zum Rest der Gussform beweglich.

Vorgesehen ist vorteilhafterweise zudem eine Vorrichtung zum Umdrehen der metallischen Gussform. Durch das Umdrehen fällt der Vorkörper aus der metallischen Gussform 10 heraus. Die Vorrichtung umfasst zudem Mittel zum Wärmebehandeln des Vorkörpers, wie beispielsweise einen Ofen. Alternativ sind Mittel vorgesehen, um den Vorkörper zu einem solchen Ofen, beispielsweise einem Muffelofen zu fördern

## Patentansprüche

1. Verfahren zur Herstellung eines Keramiktiegels mit den Schritten:
- Bereitstellen eines verfestigbaren Schlickers,
- Bereitstellen einer Gussform (10) für den Keramiktiegel
- Einfüllen des Schlickers in die Gussform (10),
- Verfestigen des Schlickers in der Gussform (10) durch
(a) Einfrieren und/oder
(b) Ändern seines pH-Werts und/oder
(c) Zugabe organischer oder anorganischer Bindemittel,
so dass ein Vorkörper entsteht und
- Wärmebehandeln des Vorkörpers, so dass ein Keramiktiegel entsteht.

2. Verfahren nach Anspruch 1,
**dadurch gekennzeichnet, dass** es sich bei dem verfestigbaren Schlicker um einen gefriergussfähigen Schlicker handelt.

3. Verfahren nach Anspruch 2,
**dadurch gekennzeichnet, dass** die Gussform (10) zumindest an einigen Stellen, die beim Einfrieren in Kontakt mit dem gefriergussfähigen Schlicker stehen, aus Metall besteht.

4. Verfahren nach Anspruch 3,
**dadurch gekennzeichnet, dass** die Gussform (10) aus Metall besteht.

5. Verfahren nach einem der vorstehenden Ansprüche,
**dadurch gekennzeichnet, dass** das Bereitstellen des verfestigbaren Schlickers das Herstellen einer Mischung umfasst aus:
- einem Dispersionsmittel,
- Keramikpartikeln mit:
i) einer Fraktion mit einem Durchmesser von unter 500 nm (Nano-Keramikpartikelfraktion), mit einem Anteil von 2 bis 74 Vol.-% bezogen auf das Volumen der gesamten Mischung
und
ii) einer Fraktion mit einem Durchmesser von über 500 nm bis 500 µm (Mikro-Keramikpartikelfraktion) mit einem Anteil von 2 bis 74 Vol.-% bezogen auf das Volumen der gesamten Mischung,
- gegebenenfalls einem Metallpulver, bestehend aus Metallen und/oder Legierungen und/oder intermetallischen Verbindungen,
- gegebenenfalls einem oder mehreren weiteren Zusatzstoffen und
- gegebenenfalls organischen oder anorganischen Bindemitteln.

6. Verfahren nach Anspruch 5,
**dadurch gekennzeichnet, dass** der Schlicker hergestellt wird durch:
- Bereitstellen eines Sols, das Keramikpartikel mit einem Durchmesser von unter 500 nm (Nano-Keramikpartikelfraktion) umfasst,
- Vermischen des Sols mit Keramikpartikeln mit einem Durchmesser zwischen 500 nm und 500 µm (Mikro-Keramikpartikelfraktion),
- gegebenenfalls Vermischen mit einem Metallpulver, bestehend aus Metallen und/oder Legierungen und/oder intermetallischen Verbindungen,
- gegebenenfalls Vermischen mit einem oder mehreren weiteren Zusatzstoffen und
- gegebenenfalls Vermischen mit organischen oder anorganischen Bindemitteln.

7. Verfahren nach Anspruch 5 oder 6, **dadurch gekennzeichnet, dass** als Nano-Keramikpartikelfraktion Keramikpartikel aus ein, zwei oder mehr keramischen Verbindungen eingesetzt werden, die aus der Gruppe ausgewählt sind, die besteht aus: Siliziumdioxid; Aluminiumoxid, insbesondere Böhmit; Zirkoniumdioxid; Yttriumoxid; Yttriumsalze; Zirkoniumnitrat; Titandioxid

8. Verfahren nach einem der Ansprüche 5 bis 7, **dadurch gekennzeichnet, dass** die Nano-Keramikpartikelfraktion zu über 60 Gew.-%, vorzugsweise zu über 90 Gew.-% aus Silizioumdioxid besteht.

9. Verfahren nach einem der Ansprüche 5 bis 8,
**dadurch gekennzeichnet, dass** die Nano-Keramikpartikelfraktion einen Anteil von 2 bis 30 Vol.-% bezogen auf das Volumen der gesamten Mischung hat.

10. Verfahren nach einem der Ansprüche 5 bis 9, wobei die Mikro-Keramikpartikelfraktion aus Oxiden, Mischoxiden, Nitriden und/oder Carbiden von einem oder mehreren Elementen besteht, die aus der folgenden Gruppe ausgewählt sind: Lithium, Beryllium, Bor, Natrium, Magnesium, Aluminium, Silizium, Kalium, Calcium, Scandium, Titan, Vanadium, Chrom, Mangan, Eisen, Cobalt, Nickel, Kupfer, Zink, Yttrium, Zirkonium, Niob, Molybdän, Technetium, Hafnium, Zinn, Cadmium, Blei, Strontium, Barium, Antimon.

11. Verfahren nach einem der Ansprüche 5 bis 10,
**dadurch gekennzeichnet, dass** die Mikro-Keramikpartikelfraktion einen Anteil von 30 bis 60 Vol.-% bezogen auf das Volumen der gesamten Mischung hat.

12. Verfahren nach einem der Ansprüche 5 bis 11, wobei als Metallpulver
- ein Pulver eines Metalls und/oder
- eine Mischung von Pulvern von Metallen und/oder
- ein Pulver einer Legierung oder Verbindung aus zwei oder mehr Metallen aus einer Gruppe von Metallen eingesetzt wird, die besteht aus: Aluminium, Magnesium, Zirkonium, Niob, Yttrium, Hafnium, Vanadium, Kalzium, Kalium, Tantal, Titan, Eisen, Silizium, Germanium, Molybdän, Mangan, Zink, Zinn, Bismut, Nickel, Kobalt.

13. Verfahren nach einem der Ansprüche 5 bis 12, wobei die Mischung
- ein Metallpulver und/oder
- eine Mikro-Keramikpartikelfraktion und/oder
- einen oder mehrere weitere Zusatzstoffe
enthält, die
a) sich untereinander und/oder mit gasförmigen Reaktanten unter Volumenvergrößerung umsetzen lassen oder
b) durch thermische Aktivierung zu einer Veränderung des Kristallgitters (Phasenveränderung) und damit zu einer Volumenvergrößerung veranlasst werden können, und
wobei der Vorkörper nach dem Einfrieren des Schlickers, gegebenenfalls unter Zusatz eines oder mehrerer gasförmiger Reaktanten und/oder gasbildender Reaktanten so behandelt wird, dass das Metallpulver und/oder die Keramikpartikel und/oder eine oder mehrere der weiteren Zusatzstoffe unter Volumenvergrößerung
a) chemisch reagieren oder
b) eine Phasenveränderung durchführen.

14. Verfahren nach Anspruch 13, **dadurch gekennzeichnet, dass** der Anteil an
- Metallpulver und/oder
- Mikro-Keramikpartikelfraktion und/oder
- dem einen oder den mehreren Zusatzstoffen,
die unter Volumenvergrößerung chemisch reagieren oder eine Phasenveränderung durchführen, im Schlicker so hoch gewählt ist, dass der fertige Keramiktiegel in seinen Außenabmessungen von den korrespondierenden Innenabmessungen der Gussform (10) jeweils bei 23 °C und 1013 hPa um weniger als 2 %, vorzugsweise weniger als 1 %, abweicht.

15. Keramiktiegel,
**dadurch gekennzeichnet, dass** er nach einem der vorstehenden Verfahren herstellbar ist, vorzugsweise hergestellt ist.

16. Kit zur Herstellung eines Keramiktiegels mit:
- einer Gussform (10), vorzugsweise einer Metallform, für einen Keramiktiegel,
- einem Sol, vorzugsweise einem wässrigen Siliziumdioxid -Sol, umfassend eine Nano-Keramikpartikelfraktion,
- Keramikpartikel, umfassend eine Mikro-Keramikfraktion,
- gegebenenfalls einem Metallpulver, bestehend aus Metallen und/oder Legierungen und/oder intermetallischen Verbindungen,
- gegebenenfalls einem oder mehreren weiteren Zusatzstoffen und
- gegebenenfalls organischen oder anorganischen Bindemitteln.

17. Vorrichtung zum Durchführen eines Verfahrens nach Anspruch 1 mit
- einer Gussform (10) für mindestens einen Keramiktiegel und
- einer mit einem Vorratsbehälter für einen Schlicker in Verbindung bringbaren Dosiervorrichtung zur Abgabe des Schlickers in die Gussform, **gekennzeichnet durch**
- Mittel zum Kühlen der Gussform (10) unter die Gefrieraushärtetemperatur des Schlickers und/oder Mittel zum Zudosieren einer Säure oder einer Base zum Schlicker und/oder Mittel zum Zugeben von organischem oder anorganischem Bindemittel zum Schlicker,
- Mittel zum Entformen eines **durch** Verfestigen aus dem Schlicker hervorgegangenen Vorkörpers aus der Gussform und
- Mittel zum Wärmebehandeln des Vorkörpers.
